(19) Europäisches Patentamt
European Patent Office
Office européen des brevets

(11) **EP 1 345 350 A1**

(12) **DEMANDE DE BREVET EUROPEEN**

(43) Date de publication:
**17.09.2003 Bulletin 2003/38**

(51) Int Cl.7: **H04L 1/00**, H04L 27/26

(21) Numéro de dépôt: **03368019.0**

(22) Date de dépôt: **10.03.2003**

| | |
|---|---|
| (84) Etats contractants désignés:<br>**AT BE BG CH CY CZ DE DK EE ES FI FR GB GR HU IE IT LI LU MC NL PT RO SE SI SK TR**<br>Etats d'extension désignés:<br>**AL LT LV MK** | (72) Inventeur: **Brossier, Jean-Marc**<br>**38400 Saint Martin d'Hères (FR)** |
| (30) Priorité: **11.03.2002 FR 0202981** | (74) Mandataire: **Schuffenecker, Thierry**<br>**97, chemin de Cassiopée,**<br>**Domaine de l'étoile**<br>**06610 La Gaude (FR)** |
| (71) Demandeur: **STMicroelectronics S.A.**<br>**92120 Montrouge (FR)** | |

(54) **Procédé de modulation et de détermination du nombre de bits à transmettre sur un canal de transmission**

(57) Un procédé de modulation pour un système de transmission numérique avec code correcteur d'erreur et comportant une détermination du nombre de bits à charger sur un canal de transmission. Le procédé associe judicieusement un codeur destiné à ajouter de la redondance aux informations binaires, un entrelaceur permettant de supprimer toute corrélation dans les éléments binaires et un étiquetage de ces mêmes éléments avec un codage de type GRAY afin d'associer les dits éléments binaires entrelacés avec un point d'une constellation choisie parmi un ensemble prédéfinies de constellations. Le procédé permet une détermination précise de l'ordre de la constellation à choisir et du nombre de bits à charger sur le canal en fonction du rapport signal sur bruit mesuré en réception et en fonction de la probabilité d'erreur binaire $P_{bit}$ en sortie du récepteur. Le procédé est particulièrement adapté à la réalisation de systèmes de transmission de type multiporteuses, et s'avère même parfaitement adapté à l'emploi de turbo codes.

Fig. 2

**Description**

**Domaine technique de l'invention**

La présente invention concerne le domaine des communications numériques et plus spécialement un procédé d'ajustage de la constellation dans un système de communication numérique à multiporteuse.

**Etat de la technique**

Le développement des réseaux de communication requiert des techniques de modulation de plus en plus performantes, permettant des niveaux de communication de plus en plus élevés.

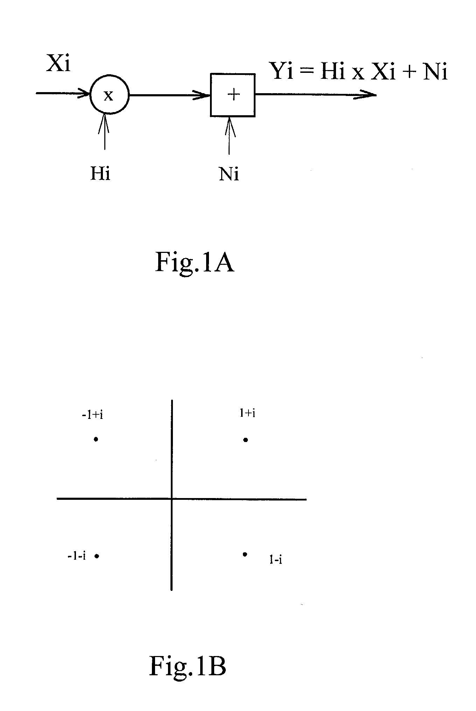

La figure 1 illustre particulièrement la transmission d'un signal numérique $X_i$ au travers d'un canal à bruit blanc additif (connue sous la dénomination anglo-saxonne *Additive White Gaussian Noise* ou AWGN). Dans cette situation, le signal d'entrée $x_i$ subit l'effet d'un gain complexe $H_i$ associé à un bruit blanc gaussien $n_i$ de variance $N_i$.

$$y_i = H_i x_i + n_i$$

Le signal d'entrée $x_i$ est défini par un schéma de modulation, c'est à dire appartient à un ensemble fini - une constellation - de nombres complexes.. Dans la modulation à déplacement de phase à deux états (MDP2) (connue sous l'appellation *Binary Phase Shift Keying BPSK* dans la littérature anglo-saxonne), la constellation se compose d'un ensemble de deux points complexes, respectivement -1 et +1 et, dans une modulation en quadrature - dite Quadrature Amplitude Modulation à quatre états ou 4QAM telle qu'illustrée dans la figure 1 B - la constellation se compose d'un ensemble de quatre points complexes.

Pour effectuer la modulation du signal à transmettre on réalise une opération d'étiquetage du signal à transmettre *(labelling* ou *mapping* dans la littérature anglo-saxonne), consistant à poser une relation directe et bijective entre le signal composé de symboles ou mots à transmettre et les divers points de la constellation. Dans une 4QAM, on fait correspondre quatre mots binaires, chaque mot binaire correspondant à l'un des points de la constellation en sorte que l'on pourra alors transporter simultanément deux bits sur le canal de transmission.

Dans les canaux de transmission statiques ou quasi-statiques, le choix de la constellation - et donc du nombre de bits pouvant être simultanément transmis sur le canal - est judicieusement choisi en fonction des caractéristiques du canal de transmission et, en général avant le début de la transmission, par une mesure directe du rapport signal sur bruit en réception, mesuré dès l'établissement du canal de transmission. Le nombre de bits pouvant être chargé sur le canal - ou l'ordre de la constellation - sera d'autant plus grand que l'on mesurera un rapport signal sur bruit favorable dans le canal de transmission. D'une manière concrète, on réalise la détermination de l'ordre de la constellation en fonction des caractéristiques de transmission de ce canal - supposé statique ou quasi-statique - et en particulier du rapport signal sur bruit dont la valeur est mesurée en réception et renvoyée à l'émetteur préalablement à la transmission pour fixer la constellation à employer. Dans un système de modulation multi-porteuse - connue dans la littérature anglo-saxonne sous les dénominations *Orthogonal Frequency Duplex Modulation* (OFDM) ou encore *Discrete Multi-Tone* ou DMT- on juxtapose plusieurs canaux les uns à côté des autres et l'on peut ainsi sommer plusieurs signaux, chaque signal étant translaté autour d'une fréquence qui lui est propre. On ajuste alors l'ordre de la constellation à employer pour un canal (et pour une fréquence de porteuse donnée) en fonction de la *réponse* dudit canal pour la fréquence de la porteuse considérée. Ainsi, pour le canal présentant le rapport signal sur bruit le plus favorable, on pourra y associer un ordre de constellation plus important - jusqu'à quinze bits transmis en parallèle ou plus - que par rapport à un canal moins favorable .... A un choix de constellation correspondra un nombre de d'éléments d'information ou bits qui pourront être transmis. Un système de transmission numérique - tel que connu dans l'état de la technique - procédera par conséquent à l'opération de détermination de l'ordre optimal de la constellation à employer et plus spécialement au calcul du nombre de bits transmis simultanément pour chacun des canaux (opération dénommée *bit loading* dans la littérature anglo-saxonne). Concrètement, pour un canal donné, on procède en déterminant la plus grande constellation qui, à puissance d'émission égale à 1, assure une probabilité d'erreur inférieure à un seuil donné, par exemple $10^{-4}$ . On trouvera pour un canal de transmission une constellation donnée et, par conséquent, un nombre de bits fixé.

Dans un système sans correction d'erreur, on connaît par exemple la formule suivante qui permet de déterminer le nombre b de bits à utiliser pour un canal donné :

$$b = \log_2(M) = \log_2\left(1 + \frac{SNR_{out}}{\Gamma}\right)$$

avec $SNR_{out} = \frac{|H_i|^2}{N}$ étant le rapport signal sur bruit en sortie du canal, et $\Gamma$ représentant une grandeur caractéristique d'un niveau de performance et plus précisément représentative de la probabilité d'erreur $P_{bit}$ que l'on se fixe en réception. Brièvement, en fonction de cette dernière quantité $\Gamma$ et du rapport signal sur bruit $SNR_{out}$, on voit que l'on peut définir précisément l'ordre de la constellation, i.e. le nombre b de bits que l'on peut simultanément transmettre au travers le canal.

Ainsi, dans un système classique on réalise l'opération de détermination du nombre de bits à transmettre simultanément - i.e. l'ordre de la constellation - en procédant à la mesure du rapport signal sur bruit en réception, laquelle permet ensuite, par un simple calcul de déterminer la valeur b du nombre de bits à charger sur le canal considéré.

Si la détermination de l'ordre de la constellation s'avère satisfaisante dans les systèmes de transmission connus, sans codage, on constate cependant que la situation devient bien moins aisée lorsque l'on introduit un code correcteur d'erreur dans le schéma de la modulation, tel qu'un code correcteur d'erreur Reed-Solomon par exemple. Dans ce cas, les symboles qui sont associés d'une manière bijective aux points de la constellation par l'opération d'étiquetage ne comportent plus uniquement des bits d'information parfaitement aléatoires mais également des informations redondantes qui sont caractéristiques du code correcteur d'erreur utilisé.

Le calcul de l'ordre de la constellation à employer - et corrélativement le nombre de bits à charger dans le canal - s'avère alors bien moins aisé. On s'en sort généralement, dans les systèmes connus, en procédant à un calcul intermédiaire, celui d'un gain de codage résultant de l'emploi du code correcteur d'erreur. On utilise ce gain de codage pour se ramener fictivement à une situation sans codage, laquelle permet de faire usage des formules connues, telles que celle exposée précédemment, pour fixer l'ordre de la constellation et le nombre de bits à charger dans le canal. Ainsi, si l'on se fixe une probabilité d'erreur à 10⁻⁷, on calcule la probabilité brute sans codage, laquelle sera par exemple calculée à 10⁻⁴ et on utilisera cette valeur pour déterminer la constellation à utiliser et le nombre de bits b à employer dans le schéma de modulation.

Comme on le voit, cette méthode de calcul du type du signal à transmettre - bien qu'étant très répandue dans les systèmes connus - est parfaitement empirique et interdit toute précision dans la détermination. Plus généralement, on constate que la structure connue des modulateurs ne permet pas aisément de combiner l'emploi d'un code correcteur d'erreur et d'un procédé de détermination du nombre de bits à charger dans un canal de transmission.

Le problème à résoudre par l'objet de la présente demande consiste à fournir une nouvelle structure de modulateur parfaitement adapté à l'emploi simultané d'un code correcteur d'erreur et à la détermination du nombre de bits à charger dans un ou plusieurs canaux de transmission. Plus spécifiquement, il est souhaitable de fournir un nouvel algorithme de détermination de l'ordre de la constellation à employer qui est parfaitement adapté à l'emploi d'un modulateur comportant un code correcteur d'erreur.

**Exposé de l'invention**

La présente invention a pour but un procédé de détermination de l'ordre de la constellation dans un système de modulation adapté à l'emploi simultané d'un code correcteur d'erreur.

C'est un autre but de la présente invention que de fournir une structure de modulateur adaptée à l'emploi d'un code correcteur d'erreur et d'un procédé de détermination de l'ordre de la constellation.

L'invention réalise ces buts au moyen d'un procédé de modulation pour un système de transmission numérique avec code correcteur d'erreur et comportant une détermination du nombre de bits à charger sur un canal de transmission. Le procédé associe judicieusement un codeur destiné à ajouter de la redondance aux informations binaires, un entrelaceur permettant de supprimer toute corrélation dans les éléments binaires et un étiquetage de ces mêmes éléments avec un codage de type GRAY afin d'associer les dits éléments binaires entrelacés avec un point d'une constellation choisie parmi un ensemble prédéfinies de constellations. Le procédé permet une détermination précise de l'ordre de la constellation à choisir et du nombre de bits à charger sur le canal en fonction du rapport signal sur bruit mesuré en réception et en fonction de la probabilité d'erreur binaire $P_{bit}$ en sortie du récepteur. Le procédé est particulièrement adapté à la réalisation de systèmes de transmission de type multiporteuses, et s'avère même parfaitement adapté à l'emploi de turbo codes.

L'emploi d'un entrelaceur - classiquement envisagé dans les systèmes numériques à canaux dynamiques tel que les transmissions radios - présente un grand avantage dans un système de modulation pour un canal statique. En effet, il permet de dériver une relation directe entre la probabilité d'erreur binaire après décodage dans le récepteur en fonction du rapport signal sur bruit en réception et, de ce fait, permet d'en déduire simplement le nombre de bits qu'il convient de charger sur le canal de transmission.

Ainsi peut on obtenir une détermination fine et précise de l'ordre de la constellation à employer, sans avoir à recourir sans avoir à recourir aux artifices de calcul et aux paramètres approximatifs tel que le gain de codage utilisé dans la technique connue.

Préférentiellement, on pourra employer un encodeur à décodage de type hard avec un code C(n,k,t) construit sur un corps de Galois à m éléments, produisant n symboles à partir de k symboles informatifs, et ayant une capacité de correction égale à t. La constellation sera alors déterminée par les trois formules ci-après donnant un lien direct entre la probabilité d'erreur binaire $P_{bit}$ après décodage et la probabilité d'erreur p en sortie du démodulateur :

$$P_s = 1-(1-p)^m$$

$$P_d = \sum_{i=t+1}^{n} \frac{i}{n} \binom{n}{i} P_s^i \left(1 - P_s\right)^{n-i}$$

$$P_{bit}=1-(1-P_d)^{\frac{1}{m}}.$$

Ces formules pourrons être avantageusement implémentées dans des tables de correspondance, et la détermination de la constellation pourra alors être réalisée au moyen d'une recherche de maximisation de l'expression suivante :

$$b_i = \max\left\{ 1 \le b \le b_{\max} : K_b Q\left( \sqrt{\frac{d_b^2 |H_i|^2_i}{2N_i}} \right) \le p \right\}.$$

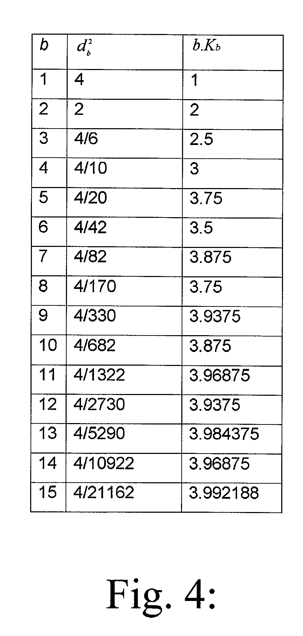

Pour les valeurs numériques de $K_b$ et $d_b^2$, on pourra se reporter en particulier aux données de la figure 4.

Préférentiellement, on pourra envisager l'utilisation de code correcteur d'erreurs de type Reed-Solomon.

L'invention est également parfaitement adaptée à l'emploi de codes correcteur d'erreur à décodage de type soft, dont le code C(n,k) est construit sur un corps de Galois à 2 éléments GF(2) avec un décodeur de vraisemblance maximale souple. L'existence de l'entrelaceur permet alors de déduire, comme auparavant dans le cas d'un code de type hard, une relation directe entre la probabilité d'erreur $P_{bit}$ en sortie de décodeur et la probabilité d'erreur en sortie de démodulateur. Et, comme précédemment, on pourra alors directement calculer l'ordre de la constellation à partir d'une recherche de maximisation d'un critère.

L'invention est particulièrement adaptée à la réalisation de système de transmission mono ou multiporteuses.

**Description des dessins**

D'autres caractéristiques, buts et avantages de l'invention apparaîtront à la lecture de la description et des dessins ci-après, donnés uniquement à titre d'exemples non limitatifs. Sur les dessins annexés :

La figure 1a illustre l'effet d'un canal de transmission de type AWGN sur un signal numérique.

La figure 1 b illustre une constellation de type 4QAM

La figure 2 représente un mode de réalisation d'un ensemble modulateur-démodulateur conforme à la présente invention.

La figure 3 illustre le procédé de calcul du nombre de bits à charger dans le canal de transmission.

La figure 4 illustre une table donnant la correspondance entre la distance euclidienne et le nombre moyen d'erreurs binaires pour des constellations de type QAM normalisées avec un étiquetage de type GRAY.

**Description d'un mode de réalisation préféré**

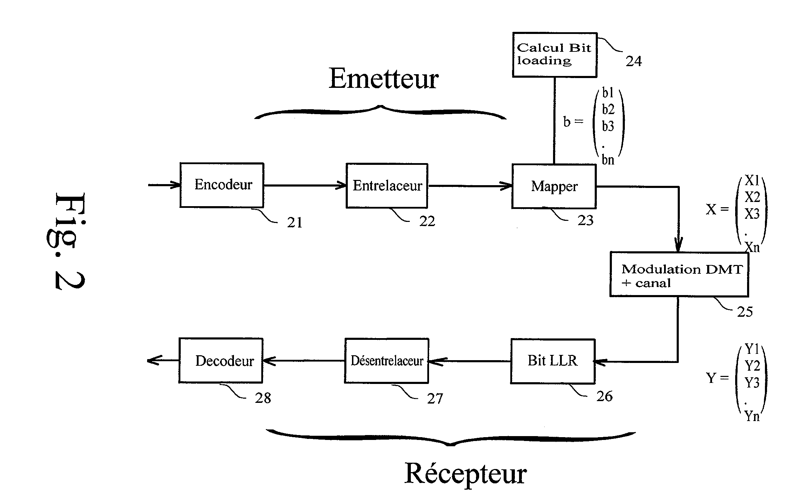

On décrira à présent, en référence avec la figure 2, une chaîne de modulation-démodulation qui est parfaitement adaptée à l'emploi d'un code correcteur d'erreur et à celui d'un algorithme de calcul du nombre de bits de chargement dans un canal de transmission. Pour démontrer la généralité de la méthode, on envisagera plus spécifiquement le cas d'un système de transmission à porteuses orthogonales multiples de type DMT. Clairement, il ne s'agit qu'un type de réalisation préféré, et l'homme du métier pourra avantageusement adapter le procédé de modulation/démodulation à un système mono-porteuse De la même manière, on envisagera à des fins d'illustration l'application du procédé à la mise au points d'une transmission de type Asynchronous Digital Subscriber Line (A.D.S.L.), ou bien Very-high-bit-rate Digital Subscriber Line (V.D.S.L.) et plus généralement xD.S.L. dans laquelle on pourra avantageusement faire application de l'enseignement de l'invention pour toutes sortes de canaux : lignes téléphoniques, transmission par satellite ou par fibre optique etc...

La chaîne de modulation se compose d'un encodeur binaire 21 permettant d'ajouter de la redondance pour le contrôle d'erreurs. Typiquement on pourra utiliser tout type de système de code correcteur d'erreur tels que Reed-Solomon, Bose Chaudhury Hocquenghem (BCH), Low-Density Parity-Check (LDPC), un code convolutif, un turbo-code convolutif, un turbocode produit etc...

En sortie de l'encoder binaire 21, les éléments binaires sont ensuite traités par un entrelaceur 22 que l'on rencontre dans la littérature anglo-saxonne sous l'appellation *interleaver.* L'entrelaceur 22 permet de modifier l'ordre d'une séquence de bits et de supprimer la corrélation introduite par la modulation et par l'encodeur 21. On supposera alors que la longueur de l'entrelacement est suffisamment importante pour cela. L'emploi d'un entrelaceur - utilisée sous l'appellation Bit Interleaving Coded Modulation (B.I.C.M.) est une technique très récente et envisagée pour les transmissions numériques dans les canaux dynamiques, telles que dans les transmissions radios, afin de permettre aux codes correcteurs d'erreurs de reconstituer le signal binaire et de ne pas être pris en défaut même si, pendant un bref instant toute une séquence de bits a été perdu du fait de l'apparition d'interférences radios. L'homme du métier se reportera plus particulièrement aux travaux de M. ZEHAVI et CAIRE et notamment à la publication « Bit-interleaved coded modulation » in IEEE Trans. Inf. Theory, vol. 44, n°4, pp. 932-946, May 1988.

On utilise dans la présente invention cette technique pour des canaux statiques afin d'optimiser le calcul de l'ordre de la constellation à employer pour chaque canal considéré.

En sortie de l'entrelaceur, les bits sont fournis à un mapper 23 lequel construit un vecteur complexe QAM **x**= (**x**1,..,**x**N), dans lequel N représente le nombre de sous-porteuses. Un bloc 24 met en oeuvre un algorithme de détermination de l'ordre de la constellation et fournit un vecteur **b** = (b1,..,bN), contenant le nombre de bits que le mapper 23 affecte à chacune des sous-porteuses. Il est à noter que l'homme du métier pourra aisément adapter le schéma à tout système de transmission utilisant n canaux parallèles - notamment la démodulation vectorielle et également des applications de type M-ary orthogonal signaling, ou Frequency Division Multiplexing (F.D.M.). L'application à la DMT ne constitue clairement qu'un mode de réalisation préféré de l'invention.

Chacun des éléments $x_i$ correspond par conséquent à un point dans une constellation QAM de taille $2^{bi}$. Dans l'hypothèse ou l'interférence inter-symbole peut être supprimée au moyen d'un préfixe cyclique de longueur comparable à la réponse impulsionnelle du canal, comme cela est connu de l'homme du métier, la sortie **y** = (y1,...,yN) du démodulateur DMT - représenté par un bloc 25 dans la figure 2 - est donnée par la formule :

$$yi = Hi.xi + ni, \quad i = 1,.., N,$$

dans laquelle $H_i$ représente la réponse en fréquence du canal, et *ni* la contribution du bruit pour la ième sous-porteuse.

Si l'on se place à présent du côté du récepteur, à savoir la partie inférieure du schéma de la figure 2, on effectue le calcul des rapports de vraisemblances des bits reçus au moyen d'un bloc 26 dit *Logarithmic Likelihood Ratio* (L.L.R.) . Ce type de calcul est bien connu de l'homme du métier et ne sera par conséquent pas développé davantage. Les bits sont ensuite désentrelacés au moyen d'un désentrelaceur 27 (ou *deinterleaver* dans la littérature anglo-saxonne) puis utilisés par un décodeur 28 - de même type que l'encodeur 21 - afin de restaurer les bits initiaux. On notera que, dans un mode de réalisation préféré, le bloc 26 peut servir à la génération de rapports de vraisemblances utilisés pour l'emploi des codes correcteurs d'erreurs à décodage de type soft, tels que des turbo-codes par exemple.

Le codeur 21 et le décodeur 28 constituent un système de code correcteur d'erreur de type quelconque, par exemple Reed-Solomon.

L'invention est particulièrement adaptée pour un canal de transmission statique, présentant un vecteur $H_i$ de valeur constante. Les formules ci-après seront données avec l'hypothèse d'un bruit blanc additif de type gaussien (dit AWGN) présentant une variance égale à $N_i$. On utilise plus spécifiquement un étiquetage de type GRAY au sein du bloc mapper 23 qui, comme on va le voir, apporte des performances particulièrement élevées.

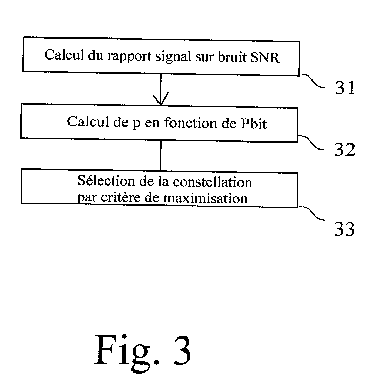

En référence à la figure 3, on décrira à présent comment on peut déterminer de manière précise le vecteur **b** = (b1,..,bN) au sein du bloc 24, en fonction du rapport signal sur bruit mesuré en réception et en fonction, également, de la probabilité d'erreur binaire $P_{bit}$ en sortie du décodeur.

Le procédé de calcul du nombre de bits de l'algorithme débute par la mesure, dans une étape 31, du rapport signal sur bruit en réception, lequel est défini comme étant $|Hi|^2/N_i$ pour la ième sous porteuse, et qui est calculé, suivant une méthode classique, sur la base d'une séquence de symboles connue de l'émetteur et du récepteur. Comme cela est connu, $|Hi|^2$ est le carré du module de l'espérance mathématique des symboles reçus $y_i$ et $N_i$ représente la variance du bruit.

Dans une étape 32, on réalise ensuite le calcul du taux d'erreur brut des bits reçus. On effectue un calcul non linéaire réalisé au moyen d'une table de correspondance définissant la probabilité d'erreur brute p en sortie du démodulateur en fonction de la probabilité d'erreur binaire $P_{bit}$ en sortie du décodeur, laquelle représente, comme on l'a indiqué, un paramètre représentatif de la qualité du canal de transmission.

La manière de calculer p en fonction de probabilité d'erreur binaire $P_{bit}$ en sortie du décodeur diffère selon le type de décodeur employé.

Lorsque le décodeur est un décodeur de type « hard » , ne recevant que des valeurs discrètes 0 ou 1 pour les bits reçus, ce qui est le cas pour un code de type Reed-Solomon par exemple, on réalise le calcul de p de la manière suivante. D'une manière générale, on peut envisager tout code C(n,k,t) produisant n bits à partir de k bits informatifs, et ayant une capacité de correction égale à t. Le code est typiquement construit sur un corps de Galois à m éléments. Comme cela est connu de l'homme du métier, on pourra employer des codes codant directement des bits d'information et, comme c'est le cas pour le code Reed-Solomon, des codes groupant les bits par paquets. Les formules ci-après permettent de lier directement la probabilité d'erreur en sortie du décodeur $P_{bit}$ et la probabilité d'erreur p en sortie du démodulateur.

$$P_s = 1-(1-p)^m$$

$$P_d = \sum_{i=t+1}^{n} \frac{i}{n}\binom{n}{i}P_s^i\left(1-P_s\right)^{n-i}$$

$$P_{bit} = 1-(1-P_d)^{\frac{1}{m}}$$

On peut réaliser ainsi, très simplement, le calcul de l'étape 32 au moyen d'un premier tableau de correspondance liant la probabilité d'erreur en sortie du décodeur $P_{bit}$ et la probabilité d'erreur p en sortie du démodulateur .

On décrira à présent comment on parvient à déterminer la relation entre les deux variables $P_{bit}$ et p lorsque le décodeur envisagé est de type *soft,* comme par exemple pour un turbo-décodeur utilisant des valeurs réelles en entrée. On considère généralement un code C(n,k) construit sur un corps de Galois à 2 éléments GF(2) et le décodeur de vraisemblance maximale souple.

Si l'on considère que

$$A(W,H) = \sum_{h=d_{min}}^{n} \sum_{w=1}^{h} A_{w,h} W^w H^h$$

est la fonction de poids d'entrée-sortie (connue sous l'appellation anglo-saxonne *input-ouput weight enumerating function* (IOWEF) et si $d_{min}$ est la distance de Hamming minimale entre deux mots du code. Dans ce cas $A_{w,h}$ représente le nombre de mots du code avec un poids de Hamming h généré par un mot d'information de poids w.

On peut alors écrire la relation suivante entre p et $P_{bit}$ :

$$P_{bit} \approx \frac{1}{k} Q\left(\sqrt{-2d_{min}\ln p}\right) p^{-d_{min}} \left.\frac{\partial A(W,H)}{\partial W}\right|_{W=1,H=p} ,$$

avec

$$Q(x) = \int\limits_{x}^{+\infty} \frac{1}{\sqrt{2\pi}} \exp\left(-\frac{t^2}{2}\right) dt \ .$$

Comme on le voit, on peut également trouver une relation directe, grâce à l'intervention de l'entrelaceur 22 et au désentrelaceur 27, entre la probabilité d'erreur en sortie du décodeur $P_{bit}$ et la probabilité d'erreur p en sortie du démodulateur. On pourra donc, dans ce cas, déduire directement ce dernier au moyen d'une seconde table de correspondance entre les deux variables. Typiquement, on pourra faire application de cette méthode de calcul de l'étape 32 pour des codes convolutifs avec décodage de VITERBI, pour des codes BCH binaires avec décodage de Chase ou encore un produit de codes BCH (avec turbo-décodage de Chase ).

Après le calcul de la valeur p lors de l'étape 32, on réalise, lors d'une étape 32 la détermination du choix de la constellation à utiliser pour le canal considéré. A cet effet, on réalise cette sélection au moyen d'une table de correspondance qui permet, étant donné les valeurs p et SNR respectivement calculées et mesurées comme on la vu précédemment, de choisir directement et d'une manière précise le nombre de bits à charger sur chaque porteuse.

D'une manière concrète on implémente cette étape au moyen d'une boucle de maximisation. En supposant que l'on dispose d'un ensemble de constellations QAM de taille $2^b$ , b= 1 à $b_{max}$, on peut appeler $d_b^2$ la carré de la distance Euclidienne minimum entre les points de la constellation et $b.K_b$ le nombre moyen d'erreurs binaires résultant des erreurs propres à cette distance minimum.

La table représentée en figure 4 indique les valeurs de $d_b^2$ et $b.K_b$ pour $b_{max}=15$].

Dans le cas d'un décodeur de type hard, on cherche à maximiser la valeur de $b_i$ de la manière suivante :

$$b_i = \max\left\{ 1 \leq b \leq b_{max} : K_b Q\left( \sqrt{\frac{d_b^2 |H_i|^2{}_i}{2N_i}} \right) \leq p \right\} \ .$$

Dans le cas d'un décodeur de type soft, on cherche alors à maximiser la grandeur suivante :

$$b_i = \max\left\{ 1 \leq b \leq b_{max} : \exp\left( -\frac{d_b^2 |H_i|^2{}_i}{2N_i} \right) \leq p \right\} \ .$$

Ainsi, en intercalant un entrelaceur au sein du modulateur dans un système adapté pour un canal statique - technique traditionnellement réservée au codage dynamique tel que radio - on observe de façon surprenante que l'on peut trouver une relation directe entre la probabilité d'erreur binaire et le rapport signal sur bruit. On arrive ainsi, du fait de l'incorporation de l'entrelaceur 22 à calculer d'une manière complètement nouvelle le nombre de bits à charger sur le canal considéré. Cela est d'autant plus surprenant que, a priori, l'intervention d'un entrelaceur en amont du mapper 23 n'a pas pour effet de changer la probabilité d'erreur en réception et, par conséquent, l'ordre de la constellation à employer. On constate ainsi qu'un élément qui apparaît parfaitement indifférent à la détermination du nombre de bits à charger sur le canal est tout spécialement avantageux puisqu'il permet alors de s'abstraire des procédés de calculs connus qui sont artificiels et approximatifs.

On constate en outre, que l'emploi de cet entrelaceur apporte d'autres avantages. En effet, si l'on associe ce denier à un étiquetage de type GRAY - ie tel qu'un seul bit change entre un point de la constellation et l'un de ses plus proches voisins - on constate que l'on peut calculer de manière particulièrement aisée le nombre de bits à charger dans chaque sous-canal et, ceci est remarquable, envisager d'autres calculs particulièrement complexes, en particulier, les calculs de vraisemblances requis pour la mise en oeuvre de turbo codes. On constate que l'invention permet à présent la mise en oeuvre des codes les plus prometteurs, mais jusqu'à présent irréalisable à mettre en oeuvre à savoir les turbo codes.

On constate ainsi que la nouvelle architecture de modulation-démodulation, combinant l'emploi d'un entrelaceur en amont du bloc mapper avec un algorithme de détermination du nombre de bits est parfaitement adapté à la mise en oeuvre d'un code correcteur d'erreur, et en particulier les codes correcteurs les plus complexes. On obtient, dans tous les cas, un système de modulation extrêmement efficace.

**EP 1 345 350 A1**

**Revendications**

1. Procédé de modulation dans un système de transmission numérique avec code correcteur d'erreur et comportant une détermination du nombre de bits à charger sur un canal de transmission, **caractérisé en ce qu'**il comporte les étapes suivantes :

   - le codage des éléments binaires au moyen d'un encodeur (21) ;
   - l'entrelacement des éléments binaires en sortie dudit encodeur ( 21) afin de supprimer la corrélation entre les éléments binaires ;
   - l'étiquetage des éléments binaires associés à un codage de type GRAY afin d'associer les dits éléments binaires entrelacés avec un point d'une constellation choisie parmi un ensemble prédéfini de constellations ; ladite constellation étant choisie en fonction du rapport signal sur bruit mesuré en réception et en fonction de la probabilité d'erreur binaire $P_{bit}$ en sortie du récepteur.

2. Procédé de modulation selon la revendication 1 **caractérisé en ce que** l'encodeur est à décodage de type hard avec un code C(n,k,t) construit sur un corps de Galois à m éléments, produisant n symboles à partir de k symboles informatifs, et ayant une capacité de correction égale à t, et **caractérisé en ce que** la constellation est déterminée en fonction de la mesure du rapport signal sur bruit en réception et en fonction de la probabilité d'erreur p en sortie du modulateur calculé à partir de ladite probabilité d'erreur binaire $P_{bit}$ en sortie du décodeur suivant les formules ci-après :

$$P_s = 1-(1-p)^m$$

$$P_d = \sum_{i=t+1}^{n} \frac{i}{n}\binom{n}{i}P_s^i\left(1-P_s\right)^{n-i}$$

$$P_{bit}=1-(1-P_d)^{\frac{1}{m}}.$$

3. Procédé de modulation selon la revendication 2 **caractérisé en ce que** la détermination de la constellation est réalisée au moyen de la lecture d'une table de correspondance entre p et $P_{bit}$.

4. procédé selon la revendication 2 **caractérisé en ce qu'**il comporte plusieurs porteuses de rang i avec i = 1 à n , chacune desdites porteuses pouvant être associée avec une constellation qui est déterminée au moyen d'un calcul de maximisation du nombre de bits à charger sur ledit canal, fourni par la formule ci-après:

$$b_i = \max\left\{1 \le b \le b_{\max} : K_b Q\left(\sqrt{\frac{d_b^2|H_i|^2_{\ i}}{2N_i}}\right) \le p\right\}.$$

   Avec
   $b_{max}$ étant l'ordre maximal de la constellation,
   $|H_i|^2/N_i$ étant le rapport signal sur bruit pour la dite porteuse de rang i,
   $d_b^2$ étant le carré de la distance Euclidienne minimum entre les points de la constellation
   $b.K_b$ étant le nombre moyen d'erreurs binaires résultant des erreurs propres à cette distance minimum.

5. Procédé selon la revendication 2 **caractérisé en ce que** l'encodeur utilise un code C(n,k,t) a décodage de type hard.

6. Procédé selon la revendication 1 **caractérisé en ce que** l'encodeur utilise un code C(n,k) à décodage soft construit sur un corps de Galois à 2 éléments GF(2) avec un décodeur de vraisemblance maximale souple, **caractérisé en ce que** la constellation est déterminée en fonction de la mesure du rapport signal sur bruit en réception et en fonction de la probabilité d'erreur p en sortie du modulateur calculé à partir de ladite probabilité d'erreur binaire $P_{bit}$ en sortie du récepteur suivant les formules ci-après

$$P_{bit} \approx \frac{1}{k} Q\left(\sqrt{-2d_{min}\ln p}\right)p^{-d_{min}} \frac{\partial A(W,H)}{\partial W}\Bigg|_{W=1, H=p},$$

avec

$$Q(x) = \int_{x}^{+\infty} \frac{1}{\sqrt{2\pi}} \exp\left(-\frac{t^2}{2}\right)dt.$$

Avec

A(W, H) étant un polynôme évaluateur de poids d'entrée/sortie

$d_{min}$ étant la distance de Hamming minimale entre deux mots du code.

7. procédé selon la revendication 6 **caractérisé en ce que** la constellation est déterminée au moyen d'un calcul de maximisation du nombre de bits à charger sur ledit canal, fourni par la formule ci-après :

$$b_i = \max\left\{1 \leq b \leq b_{max} : \exp\left(-\frac{d_b^2 |H_i|^2_{\phantom{i}i}}{2N_i}\right) \leq p\right\}.$$

$b_{max}$ étant l'ordre maximal de la constellation,

$|H_i|^2/N_i$ étant le rapport signal sur bruit pour la dite porteuse de rang i,

$d_b^2$ étant le carré de la distance Euclidienne minimum entre les points de la constellation

$b.K_b$ étant le nombre moyen d'erreurs binaires résultant des erreurs propres à cette distance minimum.

8. Procédé de modulation selon la revendication 7 **caractérisé en ce que** le système de codage emploie un turbo-code.

9. Procédé de modulation selon l'une quelconque des revendications précédentes **caractérisé en ce que** le système de transmission de transmission est un système de transmission mono-porteuse.

10. Procédé de modulation selon l'une quelconque des revendications précédentes **caractérisé en ce que** le système de transmission est un système de transmission multiporteuse de porteuses orthogonales.

Xi
$$Yi = Hi \times Xi + Ni$$

x

+

Hi

Ni

## Fig.1A

-1+i

1+i

•

•

-1-i •

• 1-i

## Fig.1B

# Fig. 2

Emetteur

Récepteur

Calcul Bit loading — 24

$b = \begin{pmatrix} b1 \\ b2 \\ b3 \\ . \\ bn \end{pmatrix}$

Encodeur — 21

Entrelaceur — 22

Mapper — 23

$X = \begin{pmatrix} X1 \\ X2 \\ X3 \\ . \\ Xn \end{pmatrix}$

Modulation DMT + canal — 25

Decodeur — 28

Désentrelaceur — 27

Bit LLR — 26

$Y = \begin{pmatrix} Y1 \\ Y2 \\ Y3 \\ . \\ Yn \end{pmatrix}$

| Calcul du rapport signal sur bruit SNR | — 31 |
| --- | --- |

↓

| Calcul de p en fonction de Pbit | — 32 |
| --- | --- |

| Sélection de la constellation<br>par critère de maximisation | — 33 |
| --- | --- |

# Fig. 3

| $b$ | $d_b^2$ | $b.K_b$ |
|----|---------|---------|
| 1 | 4 | 1 |
| 2 | 2 | 2 |
| 3 | 4/6 | 2.5 |
| 4 | 4/10 | 3 |
| 5 | 4/20 | 3.75 |
| 6 | 4/42 | 3.5 |
| 7 | 4/82 | 3.875 |
| 8 | 4/170 | 3.75 |
| 9 | 4/330 | 3.9375 |
| 10 | 4/682 | 3.875 |
| 11 | 4/1322 | 3.96875 |
| 12 | 4/2730 | 3.9375 |
| 13 | 4/5290 | 3.984375 |
| 14 | 4/10922 | 3.96875 |
| 15 | 4/21162 | 3.992188 |

# Fig. 4:

**Office européen des brevets**

## RAPPORT DE RECHERCHE EUROPEENNE

Numéro de la demande

EP 03 36 8019

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | LAU V K N: "PERFORMANCE OF VARIABLE RATE BIT INTERLEAVED CODING FOR HIGH BANDWIDTH EFFICIENCY" VTC 2000: IEEE 51ST. VEHICULAR TECHNOLOGY CONFERENCE PROCEEDINGS, TOKYO, JAPAN, vol. 3 OF 3. CONF. 51, 15 - 18 mai 2000, pages 2054-2058, XP000968365 NEW YORK, NY, USA ISBN: 0-7803-5719-1 | 1,9,10 | H04L1/00 H04L27/26 |
| A | * abrégé * * page 2054, colonne de droite, dernier alinéa - page 2055, colonne de gauche, ligne 23 * * figure 1 * | 2-8 | |
| | --- | | |
| X | EP 0 903 883 A (LUCENT TECHNOLOGIES INC) 24 mars 1999 (1999-03-24) | 1,9,10 | |
| A | * colonne 3, ligne 48 - colonne 4, ligne 35; figure 3 * | 2-8 | |
| | --- | | |
| D,A | CAIRE G ET AL: "Bit-interleaved coded modulation" IEEE TRANSACTIONS ON INFORMATION THEORY, MAY 1998, IEEE, USA, vol. 44, no. 3, pages 927-946, XP002220586 ISSN: 0018-9448 * page 927, colonne de gauche, ligne 11 - page 930, colonne de gauche, ligne 20 * * figure 1 * | 1-10 | **DOMAINES TECHNIQUES RECHERCHES (Int.Cl.7)** H04L |
| | ----- | | |

Le présent rapport a été établi pour toutes les revendications

| Lieu de la recherche | Date d'achèvement de la recherche | Examinateur |
|---|---|---|
| LA HAYE | 25 avril 2003 | Marselli, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&: membre de la même famille, document correspondant

EPO FORM 1503 03.82 (P04C02)

**EP 1 345 350 A1**

**ANNEXE AU RAPPORT DE RECHERCHE EUROPEENNE
RELATIF A LA DEMANDE DE BREVET EUROPEEN NO.**   EP 03 36 8019

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-04-2003

| Document brevet cité au rapport de recherche | Date de publication | Membre(s) de la famille de brevet(s) | | Date de publication |
|---|---|---|---|---|
| EP 0903883 A | 24-03-1999 | US | 6389066 B1 | 14-05-2002 |
| | | EP | 0903883 A2 | 24-03-1999 |
| | | JP | 3096680 B2 | 10-10-2000 |
| | | JP | 11164373 A | 18-06-1999 |

EPO FORM P0460

Pour tout renseignement concernant cette annexe : voir Journal Officiel de l'Office européen des brevets, No.12/82